# FASCICULE DE BREVET EUROPEEN

(11) **EP 2 445 267 B1**
(45) Date de publication et mention de la délivrance du brevet: **29.11.2017**
(21) Numéro de dépôt: 11186385.8
(22) Date de dépôt: 24.10.2011
(51) Int. Cl.: H04W 48/18, H04W 84/04

(54) **Procédé de signalisation à un utilisateur de la connexion de son téléphone mobile avec un boitier femto et boitier femto associé**
Verfahren zur Signalisierung an einen Benutzer, dass sein Mobiltelefon mit einer FEMTO-Box verbunden ist, und zugehörige FEMTO-Box
Method for signalling to a user when his or her mobile telephone is connected to a FEMTO box and associated FEMTO box

(30) Priorité: 22.10.2010 FR 1058693
(43) Date de publication de la demande: 25.04.2012
(73) Titulaire: Société Française du Radiotéléphone-SFR, 75008 Paris (FR)
(72) Inventeur: Fattouch, Imad, 75013 PARIS (FR); Laune, Marthe, 78000 VERSAILLES (FR)
(74) Mandataire: Ipside

(56) Documents cités:
- EP-A1- 1 681 888
- EP-A1- 1 968 339
- WO-A1-2010/031455
- US-A1- 2008 051 088

## Description

### DOMAINE TECHNIQUE DE L'INVENTION

L'invention concerne un procédé de signalisation à un utilisateur de la connexion de son téléphone mobile avec un boîtier de type femto ou n'importe quel autre type de dispositif équivalent. L'invention trouve une application particulièrement avantageuse dans le domaine des télécommunications.

### ETAT DE LA TECHNIQUE

Un réseau PLMN (Public Land Mobile Network) par exemple de type GSM (Global System for Mobile communication) ou UMTS (Universal Mobile Telecommunication System) appelé aussi réseau mobile comprend des stations de base assurant la gestion des télécommunications avec les téléphones mobiles des abonnés. Les stations de base sont associées à des macrocellules ayant une portée de l'ordre de 10 à 30km, des microcellules ayant une portée d'environ 500m et des picocellules ayant une portée de l'ordre de 100m.

Par ailleurs, on connaît des cellules de type femto ayant une portée réduite. Une femto cellule est associée à un boîtier femto installé chez un abonné relié au réseau coeur de l'opérateur (« core network » en anglais) à travers tout type de connectivité IP, notamment l'accès Internet classique via ADSL dans les foyers ou les petites entreprises. Les boîtiers femto donnent accès aux services mobiles de l'opérateur via un téléphone mobile standard, ce téléphone pouvant communiquer avec le réseau mobile sur une couverture assez restreinte qui a la particularité d'être réduite à une zone d'accès résidentielle ou d'entreprise.

L'usage d'un boîtier femto peut être restreint aux seuls membres du foyer ou de l'entreprise autorisés. On parle alors de mode dit « fermé » décrit dans le document WO2008/047041 auquel on se réfèrera.

L'usage du boîtier femto peut également être restreint à une communauté d'abonnés à un service spécifique consistant à mettre à disposition la couverture des boîtiers femto à toute personne de la communauté. On parle alors de mode dit « ouvert ». Bien entendu les deux modes d'accès « ouvert » et « fermé » peuvent cohabiter.

On sait effectuer la signalisation du réseau mobile auquel un téléphone est connecté au moyen d'un code réseau diffusé par les stations de base. La correspondance entre le code réseau diffusé et le réseau de l'opérateur matérialisé par exemple par un logo est effectuée à l'aide d'une table stockée dans la mémoire du téléphone mobile. A cet effet, l'association entre le code réseau (généralement un code à 5 chiffres : les 3 premiers codent le pays et les 2 derniers codent le réseau) et le logo est normalisée par la GSMA (GSM Association) qui diffuse cette information à tous les fournisseurs de terminaux qui implémentent cette correspondance dans la mémoire du téléphone mobile.

L'invention a pour but de permettre également la signalisation à l'utilisateur de la connexion de son téléphone à une cellule femto afin de permettre à l'utilisateur de savoir si son téléphone est relié au réseau mobile de manière classique (via les stations de base) ou via un boîtier femto.

L'art antérieur connaît, par la demande PCT N° WO 2010/031455 (T-Mobile), un procédé pour minimiser le trafic de signalisation pour des stations de base dans un réseau de télécommunications mobiles.

### OBJET DE L'INVENTION

A cet effet, l'invention met en oeuvre une fonctionnalité définie par la norme 3GPP TS 25.304 permettant de configurer les boîtiers femto sur un réseau équivalent. Ainsi configurés, les boîtiers femto émettent un code équivalent qui a la même structure que le code réseau. Toutefois, ce code équivalent ne peut pas être reconnu par le mobile car il n'existe pas de correspondance établie par la GSMA.

Pour remédier à ce problème, l'invention fait également appel et exploite avantageusement un message d'information (le message MM-INFO) émis en réponse à un message de localisation dit message « LAU » (« Location Area Update » en anglais) émis par le téléphone mobile lors de sa connexion au réseau.

Ce message d'information est associé à une fonction qui permet d'associer un code réseau et une chaîne de caractères, comme par exemple la fonction NITZ (« Network Identifier and Time Zone » en anglais). Le boîtier femto met en oeuvre cette fonction pour effectuer la correspondance entre le code réseau équivalent et le nom et/ou le logo du réseau femto.

L'invention a également pour objet une signalisation différenciée entre les différents utilisateurs du boîtier femto, que ce soit pour une notification visuelle ou sonore. L'invention permet également de personnaliser ces deux types de notification.

L'invention concerne donc un procédé de signalisation à l'utilisateur de la connexion de son téléphone mobile avec un boîtier femto relié à un réseau coeur de téléphonie mobile par l'intermédiaire d'un réseau de préférence à connectivité IP, par exemple le réseau Internet, caractérisé en ce qu'il comporte les étapes suivantes :
- configurer le boîtier femto et d'autres boîtiers femto sur un réseau équivalent, ces boîtiers femto émettant un code réseau équivalent, et
- utiliser un message d'information émis en réponse à un message de localisation, ce message d'information étant associé à une fonction permettant d'effectuer une association entre le code réseau équivalent et un nom et/ou un logo du réseau équivalent, dans lequel le boîtier femto reçoit le message d'information et effectue la correspondance entre le code réseau équivalent et le nom et/ou le logo du réseau équivalent, intègre le nom et/ou le logo dans le message d'information et retransmet le message d'information vers le téléphone mobile.

Selon une mise en oeuvre, le téléphone mobile émet le message de localisation vers le réseau coeur pour indiquer dans quelle zone le téléphone mobile se trouve,
- le réseau coeur renvoie vers le téléphone mobile le message d'information associé à la fonction permettant d'effectuer une association entre un code réseau et une chaîne de caractères,
- le téléphone mobile reçoit le message d'information et extrait de ce message d'information le nom et/ou le logo pour l'afficher à l'utilisateur.

Selon une mise en oeuvre, le nom et/ou le logo du réseau équivalent est configurable par l'utilisateur.

Selon une mise en oeuvre, une mémoire accessible par le boîtier femto contenant une liste d'identifiants d'utilisateurs associés au boîtier femto,
- le boîtier femto vérifie si le numéro IMSI du téléphone mobile correspond à un des identifiants de la liste, et
- si le numéro IMSI correspond à un des identifiants, le boîtier femto intègre dans le message d'information une indication selon laquelle la connexion avec le boîtier femto est de type « privé »,
- si le numéro IMSI ne fait pas partie de la liste, le boîtier femto intègre dans le message d'information une indication selon laquelle la connexion est de type « public »,
- le téléphone mobile extrayant cette indication du message d'information pour l'afficher à l'utilisateur.

Selon une mise en oeuvre, le procédé comporte en outre l'étape d'indiquer à l'utilisateur par un signal sonore que son téléphone mobile est connecté au boîtier femto lors de l'établissement d'un appel téléphonique.

Selon une mise en oeuvre, le procédé comporte les étapes suivantes :
- le téléphone mobile émet un message de demande d'établissement de connexion vers le réseau coeur,
- le réseau coeur émet en retour un message d'autorisation d'établissement de la connexion vers le téléphone mobile via le boîtier femto,
- le boîtier femto insérant le signal sonore dans le message d'autorisation de connexion.

Selon une mise en oeuvre, le signal sonore est configurable par l'utilisateur.

Selon une mise en oeuvre, le signal sonore est différent selon que le numéro IMSI du téléphone mobile correspond ou non à un identifiant d'utilisateur appartenant à une liste associée au boîtier femto.

L'invention concerne en outre un boîtier femto destiné à être utilisé avec le procédé selon l'invention, caractérisé en ce qu'il est configuré pour faire partie d'un réseau équivalent, ce boîtier femto émettant un code réseau équivalent.

Selon une réalisation, le boîtier femto comporte une mémoire pour stocker une liste d'identifiants d'utilisateurs associés au boîtier femto.

Selon une réalisation, les identifiants sont des numéros IMSI, ou des numéros MSISDN.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un réseau mobile dans lequel le procédé selon l'invention est mis en oeuvre ;
Figure 2 : un diagramme des différentes étapes du procédé selon l'invention ;
Figure 3 : une représentation schématique d'un réseau mobile mettant en oeuvre une variante du procédé selon l'invention ;
Figure 4 : un diagramme des différentes étapes de la variante de l'invention.

Les éléments identiques, similaires ou analogues conservent la même référence d'une figure à l'autre.

### DESCRIPTION D'EXEMPLES DE REALISATION DE L'INVENTION

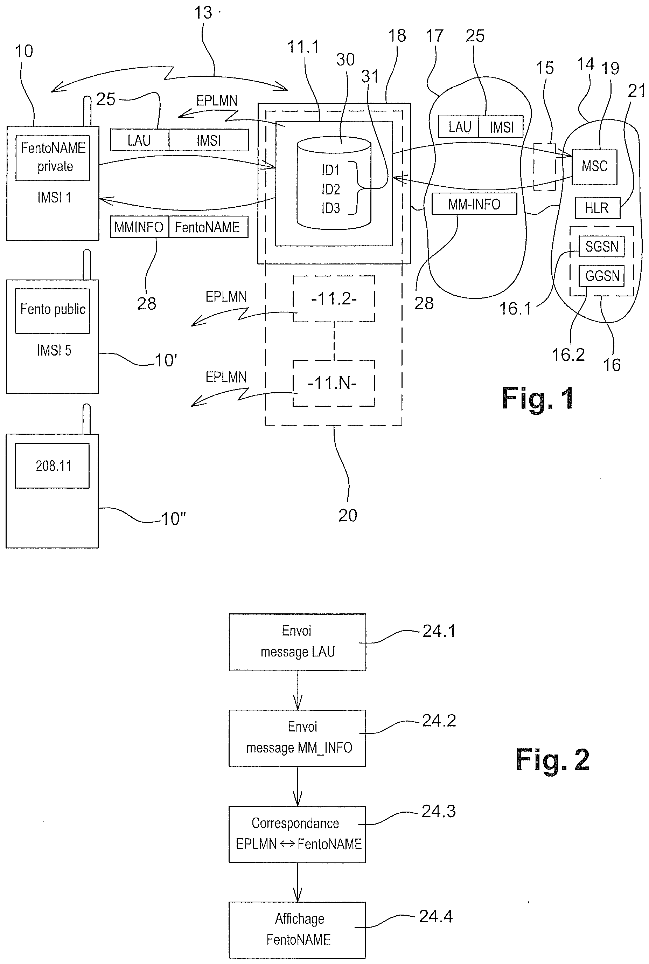

La Figure 1 montre un téléphone 10 mobile ou plus généralement un terminal mobile en relation avec un boîtier femto 11.1 via une interface radio 13. Ce boîtier femto 11.1 est relié à un réseau coeur 14 d'un opérateur de téléphonie mobile par l'intermédiaire d'un réseau 17 de type IP, par exemple le réseau Internet. A cet effet, le boîtier femto 11.1 est de préférence intégré à un boîtier 18 modem/routeur connecté au réseau Internet 17 par exemple via une ligne téléphonique.

On note que le réseau coeur 14 permet aux abonnés de communiquer à l'intérieur et à l'extérieur du réseau en fournissant les moyens d'interconnexion avec d'autres réseaux fixes ou mobiles. Un code réseau, ici le Home PLMN, est associé au réseau 14. Ce code réseau est diffusé par les stations de base de la partie radio (non représentées). Ce code est constitué de cinq chiffres : les trois premiers codent le pays (208 par exemple pour la France) et les deux derniers codent le réseau (10 correspond par exemple au réseau français SFR).

Le réseau coeur 14 comporte un module 19 MSC (« Mobile Switching Center » en anglais) assurant l'interface avec le téléphone 10 mobile accédant aux services de commutation de circuits du réseau. Au niveau de l'interface entre les réseaux 14 et 17 est installé un équipement 15 de contrôle des boîtiers femto qui correspond au module RNC (« Radio Network Controller ») pour les stations de base de type standard. Le réseau coeur 14 comporte également un module coeur paquet 16 composé d'un module 16.1 SGSN (« Serving GPRS Support Node » en anglais) et d'un module 16.2 GGSN (« Gateway GPRS Support Node » en anglais) assurant l'interface standard d'un mobile accédant aux services de type paquets.

Le boîtier femto 11.1 et d'autres boîtiers 11.2-11.N femto sont configurés sur un réseau 20 dit réseau équivalent EPLMN (Equivalent PLMN) défini dans la norme 3GPP TS 25.304. Ces boîtiers 11.1-11.N diffusent un code équivalent EPLMN qui a la même structure que le code PLMN. Dans un exemple, ce code équivalent EPLMN a la valeur 208.11. La fonctionnalité relative aux réseaux équivalents est régie par les mêmes mécanismes que les fonctions d'itinérance (« roaming » en anglais), de sorte qu'elle est compatible avec la quasi-totalité des téléphones 10 mobiles du marché. On note que lorsque le téléphone mobile 10 est en relation avec le réseau équivalent 20, le téléphone 10 n'a pas besoin de chercher à retourner sur le Home PLMN.

A la connexion, dans une étape 24.1 (cf. Figure 2), le mobile 10 détecte le code équivalent EPLMN émis par le boîtier femto 11.1 et envoie vers le module MSC un message 25 de localisation dit message « LAU » (« Location Area Update » en anglais) pour indiquer la zone du réseau dans laquelle le téléphone 10 se trouve. Ce message 25 de localisation contient l'identité de l'utilisateur, à savoir le numéro IMSI de son téléphone 10.

En réponse à ce message 25 de localisation, dans une étape 24.2, le module 19 MSC qui autorise ou non l'établissement d'une connexion avec le réseau coeur 14 envoie un message 28 d'information de type « MM-info » vers le boîtier femto 11.1. Le message MM-INFO est associé à une fonction, par exemple la fonction NITZ (Network Identifier and Time Zone), permettant d'associer à un code réseau une chaîne de caractères et/ou un logo. Il est à noter que la réponse au message 25 de localisation « LAU » est envoyée par le module 19 MSC à destination du mobile 10 et le boîtier femto 11.1 intercepte le message 28 de réponse pour ensuite l'envoyer sur l'interface radio 13.

Dans une étape 24.3, une fois que le boîtier 11.1 a reçu le message 28 d'information, ce boîtier femto 11.1 effectue la correspondance entre le code équivalent EPLMN et le nom et/ou le logo FemtoNAME correspondant. Pour les abonnés femto autorisés, le boîtier femto 11.1 intègre le nom et/ou le logo FemtoNAME dans le message 28 d'information et le retransmet vers le téléphone mobile 10.

Dans une étape 24.4, le téléphone mobile 10 reçoit le message 28 d'information et extrait alors de ce message 28 d'information le nom et/ou le logo FemtoNAME pour l'afficher à l'utilisateur.

L'association est effectuée directement par le boîtier femto 11.1 selon un paramétrage qui est modifiable manuellement. Il est donc possible d'autoriser l'utilisateur à modifier librement l'association entre le code réseau EPLMN et le nom et/ou le logo FemtoNAME, ce qui lui permettra de donner le nom de son choix au réseau équivalent 20.

En variante, une mémoire 30 accessible par le boîtier femto 11.1 contient une liste 31 d'identifiants ID1-IDn d'utilisateurs associés au boîtier femto 11.1. Cette mémoire 30 peut être intégrée dans le boîtier 11.1 ou appartenir au réseau 14. Les identifiants utilisateurs pourront correspondre à des numéros IMSI, ou des numéros MSISDN entrés par l'utilisateur via l'interface permettant de configurer le nom du réseau.

Le boîtier femto 11.1 vérifie si le numéro IMSI du téléphone mobile 10 inclus dans le message 25 de localisation correspond à un des identifiants ID1-IDn de la liste. Dans le cas où l'identifiant est un numéro MSISDN, le réseau coeur 14 pourra établir la correspondance entre ce numéro MSISDN et le numéro IMSI du téléphone 10, notamment à l'aide du module HLR (« Home Location Register » en anglais) référencé 21. Si le numéro IMSI correspond à un identifiant ID1-IDn de la liste 31, le boîtier 11.1 intègre dans le message 28 d'information une indication selon laquelle la connexion avec le boîtier femto est de type « privé ». Si le numéro IMSI ne correspond pas à un identifiant ID1-IDn de la liste 31, le boîtier 11.1 intègre une indication selon laquelle la connexion est de type « public ». Le téléphone mobile 10 extrait cette indication du message d'information pour l'afficher à l'utilisateur.

En variante, on prévoit plusieurs FemtoNAME que le boîtier femto 11.1 envoie vers le téléphone 10 en fonction des numéros IMSI (connus dans les messages 25 de localisation). Chaque FemtoNAME stocké dans la mémoire 30 peut alors correspondre à un ou plusieurs identifiants ID1-IDn.

Ainsi, dans un exemple, le téléphone 10 dont le numéro IMSI-1 correspond à l'identifiant ID1 de la liste 31 affichera une indication du type « FemtoNAME-Private ». Tandis que le téléphone 10' dont le numéro IMSI-5 ne correspond à aucun identifiant de la liste verra ainsi apparaître une indication du type « Femto-Public ».

Le téléphone mobile 10" non compatible avec le message 28 de type MM-INFO affichera le code équivalent EPLMN, soit ici le 208.11.

On remarque ainsi qu'en faisant appel au code équivalent EPLMN compatible avec la quasi-totalité des téléphones 10 mobiles du marché, l'invention fonctionne au minimum en mode dégradé avec tous les terminaux mobiles, y compris ceux qui ne sont pas compatibles avec le message 28 d'information MM-INFO.

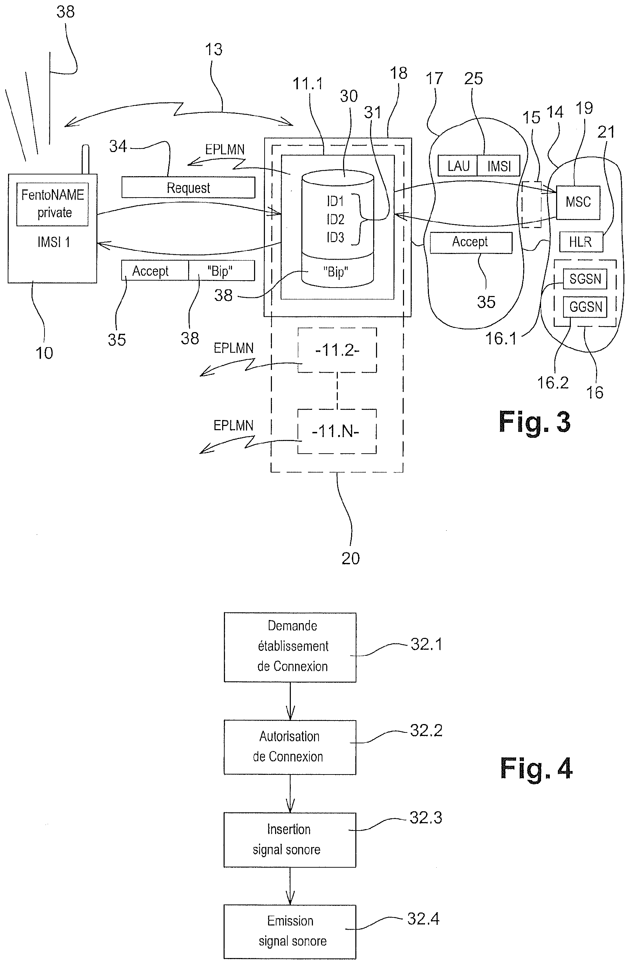

La Figure 3 montre une variante de réalisation de l'invention dans laquelle on notifie de manière sonore un utilisateur lors d'un appel téléphonique que son téléphone mobile est en connexion avec le boîtier femto 11.1. Bien entendu, cette signalisation sonore pourra être mise en oeuvre indépendamment ou en combinaison avec la signalisation visuelle décrite précédemment.

A cet effet, dans une étape 32.1 (cf. Figure 4), le téléphone mobile 10 émet un message 34 de demande d'établissement de connexion vers le réseau coeur 14. Ce message 34 pourra par exemple être émis dans le cadre d'une procédure d'allocation de canal (procédure de « channel request » en anglais). Dans une étape 32.2, le réseau coeur 14 émet en retour un message 35 d'autorisation d'établissement de la connexion vers le mobile 10 autorisé par le réseau 14.

Dans une étape 32.3, le boîtier femto 11.1 insère au moment de la réception du message 35 un signal sonore 38 dans le message 35 puis le retransmet vers le téléphone mobile 10. Dans une étape 32.4, le téléphone mobile 10 émet le signal sonore 38 à destination de l'utilisateur lors de l'établissement de l'appel. Le signal sonore 38 pourra par exemple être un signal simple de type « bip » ou un message sonore préenregistré.

Etant donné que ce signal 38 sonore est stocké dans une mémoire accessible par le boîtier femto 11.1 pour insertion dans le message 35 d'autorisation, il est possible d'autoriser l'utilisateur à modifier le signal sonore 38 via le boîtier femto 11.1. Dans un exemple, la mémoire contenant le signal 38 est la mémoire 30. Le cas échéant, l'utilisateur pourra associer le signal sonore 38 à un texte d'accompagnement.

Comme précédemment, on pourra différencier le signal sonore 38 selon que le numéro IMSI du mobile 10 de l'utilisateur correspond ou non à un identifiant d'utilisateur ID1-IDn de la liste 31 stockée dans la mémoire 30. En variante, on prévoit plusieurs signaux sonores 38 que le boîtier femto 11.1 enverra en fonction des numéros IMSI. Chaque signal sonore 38 stocké dans la mémoire 30 peut alors correspondre à un ou plusieurs identifiants ID1-IDn.

Il est à noter que les deux types de signalisations visuelle et sonore sont implémentés par des mécanismes logiciels mis en oeuvre par le boîtier femto 11.1, ce qui permet donc de simplifier au maximum le mécanisme de signalisation. En effet, dans l'invention, il n'est pas nécessaire de réaliser une implémentation complexe au niveau du réseau coeur 14 ou au niveau des téléphones mobiles 10, 10', 10", en effectuant une mise à jour de chaque téléphone de manière différente. Cela permet à l'utilisateur de pouvoir activer/désactiver la signalisation visuelle ou sonore, ainsi que de choisir la notification visuelle ou sonore comme décrit précédemment.

## Revendications

1. Procédé de signalisation à l'utilisateur de la connexion de son téléphone mobile (10) avec un boîtier femto (11.1) relié à un réseau coeur (14) de téléphonie mobile par l'intermédiaire d'un réseau (17) de préférence à connectivité IP, par exemple le réseau Internet, **caractérisé en ce qu'**il comporte les étapes suivantes :
- configurer le boîtier femto (11.1) et d'autres boîtiers femto (11.2-11.N) sur un réseau équivalent (20), ces boîtiers femto (11.1-11.N) émettant un code réseau équivalent (EPLMN) et
- utiliser, dans le boîtier femto (11.1), un message (28) d'information (MM-INFO) émis par le réseau coeur (14) en réponse à un message (25) de localisation (LAU) reçu du téléphone mobile (10), ce message (28) d'information étant associé à une fonction (NITZ) permettant d'effectuer une association entre le code réseau équivalent (EPLMN) et un nom et/ou un logo du réseau équivalent (FemtoNAME), et **en ce que** le boîtier femto (11.1) reçoit le message d'information (MM-INFO) et effectue la correspondance entre le code réseau équivalent (EPLMN) et le nom et/ou le logo du réseau équivalent (FemtoNAME), intègre le nom et/ou le logo (FemtoNAME) dans le message (28) d'information et retransmet le message (28) d'information vers le téléphone mobile (10).

2. Procédé selon la revendication 1, **caractérisé en ce que** :
- le téléphone mobile (10) émet le message (25) de localisation (LAU) vers le réseau coeur (14) pour indiquer dans quelle zone le téléphone mobile (10) se trouve,
- le réseau coeur (14) renvoie vers le téléphone mobile (10) le message d'information (MM-INFO) associé à la fonction (NITZ) permettant d'effectuer une association entre un code réseau et une chaîne de caractères,
- le téléphone mobile (10) reçoit le message (28) d'information et extrait de ce message d'information le nom et/ou le logo (FemtoNAME) pour l'afficher à l'utilisateur.

3. Procédé selon la revendication 2, **caractérisé en ce que** le nom et/ou le logo (FemtoNAME) du réseau équivalent (20) est configurable par l'utilisateur.

4. Procédé selon l'une des revendications 1 à 3, **caractérisé en ce que**
- une mémoire (30) accessible par le boîtier femto (11.1) contenant une liste (31) d'identifiants (ID1-IDn) d'utilisateurs associés au boîtier femto,
- le boîtier femto vérifie si un numéro IMSI du téléphone mobile (10) correspond à un des identifiants (ID1-IDn) de la liste (31), et
- si le numéro IMSI correspond à un des identifiants, le boîtier femto (11.1) intègre dans le message (28) d'information une indication selon laquelle la connexion avec le boîtier femto (11.1) est de type « privé »,
- si le numéro IMSI ne correspond à aucun identifiant (ID1-IDn) de la liste (31), le boîtier femto (11.1) intègre dans le message (28) d'information une indication selon laquelle la connexion est de type « public »,
- le téléphone mobile (10) extrayant cette indication du message (28) d'information pour l'afficher à l'utilisateur.

5. Procédé selon l'une des revendications 1 à 4, **caractérisé en ce qu'**il comporte en outre l'étape d'indiquer à l'utilisateur par un signal sonore (38) que son téléphone mobile (10) est connecté au boîtier femto (11.1) lors de l'établissement d'un appel téléphonique.

6. Procédé selon la revendication 5, **caractérisé en ce qu'**il comporte les étapes suivantes :
- le téléphone mobile (10) émet un message (34) de demande d'établissement de connexion vers le réseau coeur (14),
- le réseau coeur (14) émet en retour un message (35) d'autorisation d'établissement de la connexion vers le téléphone mobile (10) via le boîtier femto (11.1),
- le boîtier femto (11.1) insérant le signal sonore (38) dans le message (35) d'autorisation de connexion.

7. Procédé selon la revendication 6, **caractérisé en ce que** le signal sonore (38) est configurable par l'utilisateur.

8. Procédé selon la revendication 6 ou 7, **caractérisé en ce que** le signal sonore (38) est différent selon que un numéro IMSI du téléphone mobile (10) correspond à un identifiant d'utilisateur (ID1-IDn) appartenant à une liste (31) associée au boîtier femto (11.1).

9. Boîtier femto (11.1) comportant des moyens pour mettre en oeuvre le procédé selon l'une des revendications précédentes, **caractérisé en ce qu'**il est configuré pour faire partie d'un réseau équivalent, ce boîtier femto (11.1) émettant un code réseau équivalent (EPLMN).

10. Boîtier femto (11.1) selon la revendication 9, **caractérisé en ce qu'**il comporte une mémoire (30) pour stocker une liste (31) d'identifiants d'utilisateurs (ID1-IDn) associés au boîtier femto (11.1).

11. Boîtier femto selon la revendication 10, **caractérisé en ce que** les identifiants d'utilisateurs (ID1-IDn) sont des numéros IMSI, ou des numéros MSISDN.

## Patentansprüche

1. Verfahren zur Signalisierung an einen Benutzer, dass sein Mobiltelefon (10) mit einer FEMTO-Box (11.1) verbunden ist, die an ein Mobilfunkkernnetz (14) über ein Netz (17), vorzugsweise mit IP-Konnektivität, beispielsweise das Internet-Netz, angeschlossen ist, **dadurch gekennzeichnet, dass** es die folgenden Schritte aufweist:
- Konfigurieren der FEMTO-Box (11.1) und anderer FEMTO-Boxen (11.2-11.N) auf einem äquivalenten Netz (20), wobei die FEMTO-Boxen (11.1-11.N) einen äquivalenten Netzcode (EPLMN) senden, und
- Verwenden von einer Nachricht (28) einer Information (MM-INFO) in der FEMTO-Box (11.1), die von dem Kernnetz (14) als Antwort auf eine Nachricht (25) der Ortung (LAU), die von dem Mobiltelefon (10) empfangen wird, gesendet wird, wobei die Informationsnachricht (28) einer Funktion (NITZ) zugeordnet wird, die ermöglicht, eine Verbindung zwischen dem äquivalenten Netzcode (EPLMN) und einem Namen und/oder einem Logo des äquivalenten Netzes (FemtoNAME) zu erstellen, und dadurch, dass die FEMTO-Box (11.1) die Informationsnachricht (MM-INFO) empfängt und die Korrespondenz zwischen dem äquivalenten Netzcode (EPLMN) und dem Namen und/oder dem Logo des äquivalenten Netzes (FemtoNAME) herstellt, den Namen und/oder das Logo (FemtoNAME) in die Informationsnachricht (28) integriert und die Informationsnachricht (28) an das Mobiltelefon (10) weiterleitet.

2. Verfahren nach Anspruch 1, **dadurch gekennzeichnet, dass**:
- das Mobiltelefon (10) die Nachricht (25) der Ortung (LAU) an das Kernnetz (14) sendet, um anzugeben, in welchem Gebiet sich das Mobiltelefon (10) befindet,
- das Kernnetz (14) die Informationsnachricht (MM-INFO) an das Mobiltelefon (10) zurücksendet, die der Funktion (NITZ) zugeordnet wird, die ermöglicht, eine Verbindung zwischen einem Netzcode und einer Zeichenkette zu erstellen,
- das Mobiltelefon (10) die Informationsnachricht (28) empfängt und aus der Informationsnachricht den Namen und/oder das Logo (FemtoNAME) extrahiert, um ihn/es dem Benutzer anzuzeigen.

3. Verfahren nach Anspruch 2, **dadurch gekennzeichnet, dass** der Name und/oder das Logo (FemtoNAME) des äquivalenten Netzes (20) von dem Benutzer konfigurierbar ist.

4. Verfahren nach einem der Ansprüche 1 bis 3, **dadurch gekennzeichnet, dass**
- wobei ein Speicher (30), der von der FEMTO-Box (11.1) zugänglich ist, eine Liste (31) von Benutzerkennungen (ID1-IDn) enthält, die der FEMTO-Box zugeordnet werden,
- die FEMTO-Box überprüft, ob eine IMSI-Nummer des Mobiltelefons (10) einer der Kennungen (ID1-IDn) der Liste (31) entspricht und,
- wenn die IMSI-Nummer einer der Kennungen entspricht, die FEMTO-Box (11.1) eine Angabe in die Informationsnachricht (28) integriert, wonach die Verbindung mit der FEMTO-Box (11.1) vom "privaten" Typ ist,
- wenn die IMSI-Nummer keiner Kennung (ID1-IDn) der Liste (31) entspricht, die FEMTO-Box (11.1) eine Angabe in die Informationsnachricht (28) integriert, wonach die Verbindung vom "öffentlichen" Typ ist,
- wobei das Mobiltelefon (10) diese Angabe aus der Informationsnachricht (28) extrahiert, um sie dem Benutzer anzuzeigen.

5. Verfahren nach einem der Ansprüche 1 bis 4, **dadurch gekennzeichnet, dass** es ferner den Schritt aufweist, dem Benutzer durch ein akustisches Signal (38) anzugeben, dass sein Mobiltelefon (10) beim Aufbau eines Telefonats mit der FEMTO-Box (11.1) verbunden wird.

6. Verfahren nach Anspruch 5, **dadurch gekennzeichnet, dass** es die folgenden Schritte aufweist:
- das Mobiltelefon (10) sendet eine Nachricht (34) einer Anfrage zum Aufbau einer Verbindung an das Kernnetz (14),
- das Kernnetz (14) sendet eine Nachricht (35) der Genehmigung des Aufbaus der Verbindung über die FEMTO-Box (11.1) an das Mobiltelefon (10) zurück,
- wobei die FEMTO-Box (11.1) das akustische Signal (38) in die Nachricht (35) der Genehmigung der Verbindung einfügt.

7. Verfahren nach Anspruch 6, **dadurch gekennzeichnet, dass** das akustische Signal (38) von dem Benutzer konfigurierbar ist.

8. Verfahren nach Anspruch 6 oder 7, **dadurch gekennzeichnet, dass** das akustische Signal (38) unterschiedlich ist, je nachdem, ob eine IMSI-Nummer des Mobiltelefons (10) einer Benutzerkennung (ID1-IDn) entspricht, die zu einer Liste (31) gehört, die der FEMTO-Box (11.1) zugeordnet wird.

9. FEMTO-Box (11.1), umfassend Mittel, um das Verfahren nach einem der vorangehenden Ansprüche umzusetzen, **dadurch gekennzeichnet, dass** sie konfiguriert ist, um Teil eines äquivalenten Netzes zu sein, wobei die FEMTO-Box (11.1) einen äquivalenten Netzcode (EPLMN) sendet.

10. FEMTO-Box (11.1) nach Anspruch 9, **dadurch gekennzeichnet, dass** sie einen Speicher (30) aufweist, um eine Liste (31) von Benutzerkennungen (ID1-IDn) zu speichern, die der FEMTO-Box (11.1) zugeordnet sind.

11. FEMTO-Box (11.1) nach Anspruch 10, **dadurch gekennzeichnet, dass** die Benutzerkennungen (ID1-IDn) IMSI-Nummern oder MSISDN-Nummern sind.

## Claims

1. Method for signalling to the user that his mobile telephone (10) is connected to a femto box (11.1) linked to a core mobile telephony network (14) by way of a network (17) preferably having IP connectivity, for example the Internet, **characterized in that** it includes the following steps:
- configuring the femto box (11.1) and other femto boxes (11.2-11.N) on an equivalent network (20), these femto boxes (11.1-11.N) sending an equivalent network code (EPLMN) and
- using, in the femto box (11.1), an information (MM-INFO) message (28) sent by the core network (14) in response to a location (LAU) message (25) received from the mobile telephone (10), this information message (28) being associated with a function (NITZ) making it possible to perform an association between the equivalent network code (EPLMN) and a name and/or a logo of the equivalent network (FemtoNAME), and **in that** the femto box (11.1) receives the information (MM-INFO) message and performs the mapping between the equivalent network code (EPLMN) and the name and/or the logo of the equivalent network (FemtoNAME), incorporates the name and/or the logo (FemtoNAME) into the information message (28) and retransmits the information message (28) to the mobile telephone (10).

2. Method according to Claim 1, **characterized in that**:
- the mobile telephone (10) sends the location (LAU) message (25) to the core network (14) in order to indicate in which zone the mobile telephone (10) is situated,
- the core network (14) returns, to the mobile telephone (10), the information (MM-INFO) message associated with the function (NITZ) making it possible to perform an association between a network code and a string of characters,
- the mobile telephone (10) receives the information message (28) and extracts, from this information message, the name and/or the logo (FemtoNAME) in order to display it to the user.

3. Method according to Claim 2, **characterized in that** the name and/or the logo (FemtoNAME) of the equivalent network (20) is able to be configured by the user.

4. Method according to one of Claims 1 to 3, **characterized in that**
- a memory (30) able to be accessed by the femto box (11.1) containing a list (31) of identifiers (ID1-IDn) of users associated with the femto box,
- the femto box checks whether an IMSI number of the mobile telephone (10) corresponds to one of the identifiers (ID1-IDn) of the list (31), and
- if the IMSI number corresponds to one of the identifiers, the femto box (11.1) incorporates, into the information message (28), an indication according to which the connection to the femto box (11.1) is of 'private' type,
- if the IMSI number does not correspond to any identifier (ID1-IDn) of the list (31), the femto box (11.1) incorporates, into the information message (28), an indication according to which the connection is of 'public' type,
- the mobile telephone (10) extracting this indication from the information message (28) in order to display it to the user.

5. Method according to one of Claims 1 to 4, **characterized in that** it furthermore includes the step of indicating to the user, through an audible signal (38), that his mobile telephone (10) is connected to the femto box (11.1) when a telephone call is set up.

6. Method according to Claim 5, **characterized in that** it includes the following steps:
- the mobile telephone (10) sends a connection setup request message (34) to the core network (14),
- the core network (14) sends in return a connection setup authorization message (35) to the mobile telephone (10) via the femto box (11.1),
- the femto box (11.1) inserting the audible signal (38) into the connection authorization message (35).

7. Method according to Claim 6, **characterized in that** the audible signal (38) is able to be configured by the user.

8. Method according to Claim 6 or 7, **characterized in that** the audible signal (38) is different depending on whether an IMSI number of the mobile telephone (10) corresponds to a user identifier (ID1-IDn) belonging to a list (31) associated with the femto box (11.1).

9. Femto box (11.1) including means for implementing the method according to one of the preceding claims, **characterized in that** it is configured to form part of an equivalent network, this femto box (11.1) sending an equivalent network code (EPLMN).

10. Femto box (11.1) according to Claim 9, **characterized in that** it includes a memory (30) for storing a list (31) of user identifiers (ID1-IDn) associated with the femto box (11.1).

11. Femto box according to Claim 10, **characterized in that** the user identifiers (ID1-IDn) are IMSI numbers or MSISDN numbers.
